# EUROPEAN PATENT APPLICATION

(11) **EP 1 376 297 A1**
(43) Date of publication of application: **02.01.2004**
(21) Application number: 02405539.4
(22) Date of filing: 27.06.2002
(51) Int. Cl.: G06F 1/00

(54) **Method to enhance authentication, integrity and auditability security in software configuration management systems**

(71) Applicant: ABB RESEARCH LTD., 8050 Zürich (CH)
(72) Inventor: Naedele, Martin, 8048 Zürich (CH)
(74) Representative: ABB Patent Attorneys

(57) **Abstract**

A method for enhancing authentication, integrity and auditability security in software configuration management (SCM) systems is disclosed, comprising: providing the SCM system with a signature key pair and optionally an encryption key pair and distributing the public key(s) to the users; providing each ACL with items defining certain rights/permissions with respect to the associated artifact; providing each item with entries specifying users by means of their digital certificates containing their public keys; upon check in, receiving messages signed by one or more users including artifacts in conjunction with specified items for the artifacts, verifying that the right to submit the artifacts is specified by the items, verifying that the required users have signed the messages by applying the corresponding signature public keys, and storing the artifacts in the code repository; and/or upon check out, receiving messages signed by one or more users including check out commands in conjunction with specified items for certain artifacts, verifying that the right to check out the artifacts is specified by the items, verifying that the required users have signed the messages by applying the corresponding signature public keys, retrieving the artifacts from the repository and eventually locking them according to the permissions defined by the items, signing the artifacts with the server's (corresponding) signature private key, and submitting the artifacts to the users. Optionally, encryption steps can be incorporated in order to ensure that only the SCM system and the users, resp., will be able to read the communicated messages. Multiple items in an ACL associated with an artifact can be treated as valid alternatives for handling the artifact and multiple users associated with an item can be treated as only being permitted to carry out an action defined in the item in conjunction.

## Description

### TECHNICAL FIELD

The present invention is concerned with software configuration management (SCM) systems. The key capabilities of these systems are the identification and the control of individual contributions (artifacts) by developers or teams to a central software project. The fact that the system has to manage these *individual* contributions gives rise to security issues. Firstly, if the authors or teams provide their contributions to the project over (public) networks, it has to be certified that there are no intrusions from the outside - consisting, f.e., in illegitimate changes to certain contributions by unauthorized persons. Secondly, every contribution - including those which are not supplied internally and not via (public) networks - gives rise to the question of tracking, auditability and liability, especially if multiple, changing contractors or even competitors supply contributions. It is thus necessary for the SCM to provide features that enable the system to prove later that a certain formerly submitted contribution which is possibly faulty comes from a certain party. Thus, the present invention is particularly concerned with enhancing the security of SCM systems in connection with the authentication of an author and the integrity and auditability of the author's contribution to the project.

### BACKGROUND ART

Since modern software has become more and more complex, it is nowadays often developed by geographically distributed developers or teams which provide individual contributions to one central software project. In order to manage and control these highly complex software projects SCM (software configuration management) systems have been developed the main issue of which is the ability to support the project team. On the one hand, individual members of the team need to be able to undertake the tasks assigned to them without interference from other team members, on the other hand, however, as each task is completed, the results need to be made available to other team members to assimilate into their own work at a time of their choosing. Version control maintains a history of the changes to a component as it evolves over time and allows users access to a particular version and not just the latest version created. Thus, there are four issues which are of crucial importance to an SCM system in view of its ability to support the team:
- Configuration identification: the approved documentation or description that identifies and defines a configuration item's functional and physical characteristics in the form of a specification or standard, algorithm or code, and interface control description.
- Configuration control: the systematic proposal, justification, evaluation, coordination, approval or disapproval of a proposed change and the implementation of all approved changes in the configuration of an item after formal establishment of its baseline.
- Configuration status accounting: the recording and reporting of information needed to manage a configuration effectively, including the approved configuration identification, the status of the proposed and incorporated changes, and the index of all approved items and their components in the system inventory.
- Configuration audits: the verification of an item's functional and physical conformance to specifications and standards and other contractual requirements.

SCM tools that deal with these features and that are commercially available are, f.e., Microsoft's "Visual Source Safe" and Rational's "Clear Case".

So far, only features in view of supporting the developing team have been mentioned. However, there is another crucial aspect that cannot be disregarded, either. It is the security aspect which becomes important in connection, firstly, with the author's providing their contributions to the project over (public) networks and, secondly, with the problem of tracking the history of a certain contribution in view of its auditability and liability. When communicating with the SCM the authors and teams must have access to the common software project's database in order to download and upload the items they are working on, instructions, specifications, version history etc. Thus, certain security requirements have to be met:
- Authentication: the need to verify that a certain contribution (item) to be integrated into the project originates from a certain author who is authorized to contribute this item.
- Integrity: the need to verify that the contribution has not been modified on transmission from the author to the integration point.
- Auditability: the need to find and prove the author of a certain contribution, e.g. in the course of later product liability and security violation investigations.

State of the art SCM systems as the ones mentioned above deal with these security features in such a way that they comprise a username/password authentication to the code repository. However, this approach has several disadvantages. If an attacker finds out the passwords he can get full access to the SCM system - once having gained access he can read and modify any item in the system's database. Furthermore, auditing of changes is only based on forgeable, voluntary comments in the code and access entity authentication. Finally, in case an attacker succeeds in circumventing the transmission encryption mechanism he can submit modified code (Trojan horses) under the audit/access entity of an authorized user. Since security built on static, reusable passwords has thus proven too easy for attackers to beat there is a need for a facility in SCM systems that fills these security gaps.

The growing importance of (public) computer networks in general led to the development of various encryption tools for establishing trustworthy identities, communications and transactions. Especially one kind of encryption tool has become rather successful because it makes use of a so-called public key (PK) cryptography. Each user participating in a communication system which makes use of PK encryption has one or several pairs of related encryption and/or signature keys: one key is kept private and the other "public" key is made freely available to others. A participant wishing to send a confidential document uses the recipient's public key in the encryption process, thus making the document unreadable to anyone except the desired recipient since only his private key can decrypt it. Inversely, a participant sending a document can "sign" it with his private key to prove authorship. The recipient validates the signature by performing a verification using the sender's public key. A certificate authority (CA) can be established that vouches for the identity of a participant in that the participant is electronically bound to the CA's public key: this is done via a digital certificate, a file that cannot be forged, which the CA creates and signs with its own private key. These digital certificates, and the public keys they contain, are made available to others as authenticated electronic identities for the participants they represent - enabling encrypted, authenticated electronic communication. Furthermore, public key infrastructure (PKI) applications for supporting public key cryptography by generating and managing the certificates containing the keys have been developed. The best known example for a PK cryptography system is probably "PGP", a software that is freely available. However, due to the complexity of SCM systems, no efforts have been made so far to combine conventional SCM systems with PK encryption mechanisms.

There is thus a need to combine PK encryption tools with SCM systems in order to fill the earlier mentioned security holes of the latter.

### SUMMARY OF THE INVENTION

It is thus an object of the present invention to provide a method for enhancing the security in connection with authentication, integrity and auditability in SCM systems by using PK encryption mechanisms.

This is achieved by a method with the features as described in claim 1. The present invention discloses a method that enhances security during communication between the SCM system and its users during check in, check out and other operational processes.

According to the present invention the method for enhancing authentication, integrity and auditability security in software configuration management (SCM) systems which manage contributions (artifacts) to the system by structuring them in a hierarchical order and by defining for each artifact an access control list (ACL) comprises the following steps of:
- providing the SCM system (either as a whole or per artifact) with a signature key pair and distributing the public key(s) to the users,
- providing each ACL with at least one item where each item defines certain rights/permissions with respect to the associated artifact,
- providing each item with at least one entry where each entry specifies a user by means of his digital certificate containing his public key(s) for signature,
- upon check in, receiving a message that has been signed by one or more users including an artifact in conjunction with a specified item for this artifact, verifying that the right to submit the artifact is specified by the item, verifying that the required user(s) has/have signed the message by applying to the message the corresponding signature public key(s) in the one or more entries associated with the item, and storing the artifact in the code repository, and/or
- upon check out, receiving a message signed by one or more users including a check out command in conjunction with a specified item for a certain artifact, verifying that the right to check out the artifact is specified by the item, verifying that the required user(s) has/have signed the message by applying to the message the corresponding signature public key(s) in the one or more entries associated with the item, retrieving the artifact from the repository and eventually locking it according to the permissions defined by the item, signing the artifact with the server's (corresponding) signature private key, and submitting the artifact to the user(s).

Further advantages and objects of the present invention are described in the dependent claims.

### BRIEF DESCRIPTION OF THE DRAWINGS

In the following the present invention will be described in more detail in connection with the enclosed drawings.

Fig. 1 shows an SCM system according to the invention in view of the underlying structure of artifacts, ACLs, items and entries.

Fig. 2 shows a flow chart for the check in process including the optional encryption/decryption steps.

Fig. 3 shows a flow chart for the check out process including the optional encryption/decryption steps.

### DESCRIPTION OF THE PREFERRED EMBODIMENTS

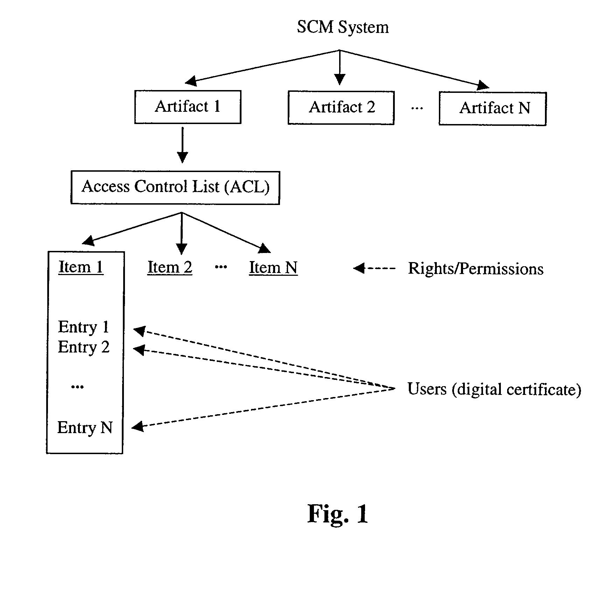

The overall architecture of an SCM system providing for PK encryption according to the present invention is as follows. The SCM system server structures the managed contributions (artifacts) hierarchically, f.e., as files and directories or as objects and containers. In addition to that, according to the present invention the system - either as a whole or per artifact/container - keeps the private key of a signature key pair whereas the public key is distributed to the contributing parties (users); the same holds for an encryption key pair, if required. Fig. 1 shows how each artifact or artifact container in the hierarchical structure of the SCM system has an associated access control list (ACL) which consists of one or more named items each of which in turn consists of one or more entries. Each item in an ACL defines certain rights with respect to the associated artifact - it can thus cover rights to list, check in/out, read/write, delete, history, rollback etc. Each entry in an item specifies a user or another entity. In the entry, the user himself is identified by means of his digital certificate containing his public keys for signature and/or encryption. Being an entry associated with a certain item, the user(s) can only execute those commands regarding the artifact which are defined in the item.

As already mentioned, an artifact's ACL can consist of one or more items and each item in turn can consist of one or more user entries. In this way, further possibilities concerning the handling of an artifact are opened. On the one hand, multiple items (which can define different rights with respect to the artifact) in an ACL can be considered as valid alternatives for handling the artifact. Thus, a certain group of users (entries of an item) may have certain rights with respect to the artifact, f.e., read/write, whereas another group (entries of another item) may have different rights, f.e., read only. On the other hand, if an item consists of multiple entries, the specified entries have to be considered in conjunction, i.e. the users can only execute an action permitted by the item if they request permission together (logically connected by an AND operator).

While it may be possible to construct the signed and encrypted user-system messages manually with conventional cryptographic tools, it is recommended - especially in case multi-signatures are required - to use a client application which automatically signs command messages and routes them to co-signers.

The above mentioned structure requires certain steps during set up of the SCM system. On the server side, the system is configured with a signature and optionally an encryption key pair and the public keys(s) is/are distributed to the users. On the client side, each user generates a signature and/or encryption key pair and submits his certificate containing the public keys as well as other information needed to establish trust in the association between him and the certificate to the SCM system. Then, the system is configured with the basic container/folder structure and the ACLs for the artifacts are initialized. During ACL initialization the above mentioned item structure (determining permissions per artifact) as well as the entry structure (specifying the users per item via their resp. certificates) have to be taken into account. Once the setup is completed, the SCM system determines the structure of the artifacts not only in view of their interdependencies but also in view of their associated security rules, i.e. permitted actions, authorized users etc.

Having so far described the underlying structural aspects and necessary components, the actual operational processes between the SCM system and its users shall now be described, i.e. check in, check out etc.

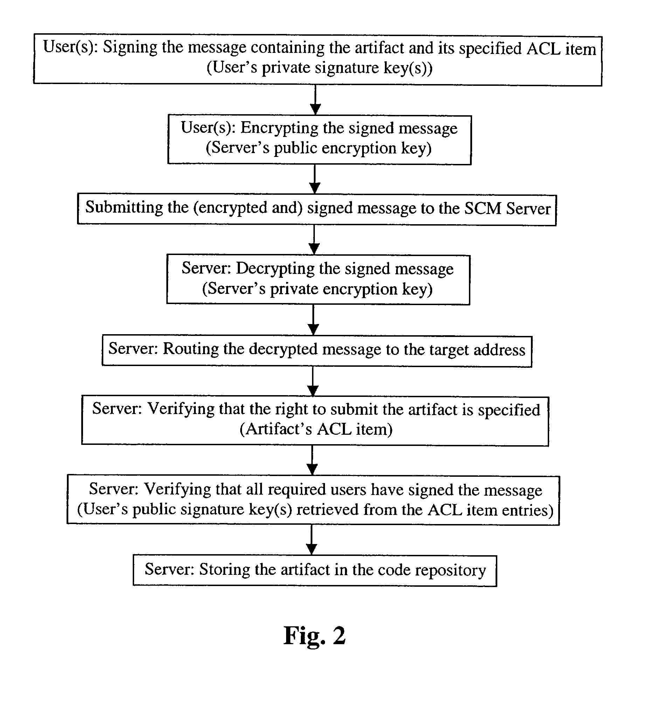

Fig. 2 illustrates the check in process. Upon check in, the developed artifact that is to be submitted to the SCM system is signed by the user or, in case only multiple users may submit this artifact in conjunction (the AND operation mentioned above), by several users. The signing can be carried out in a standard way. First, a message digest function is applied to the artifact (which may simply consist in a piece of code C) and possibly additional information A1 (f.e., a time stamp), generating a hash H. The developer then signs the hash and possibly additional information A2 using his private key and sends C+A1+signed(H+A2) to the SCM system together with a designation D of the destination location within in the SCM setup (f.e., path, directory, package, subsystem etc.). In addition to that, the message can be encrypted with the server's public encryption key in order to make sure that only the SCM system will be able to read and analyze the artifact.

Having received the encrypted message containing the artifact C and the designation information D, the server decrypts the message using its private encryption key (or one of them, resp.). In this way, the server can (a) find the place where to store the artifact and (b) check whether the decryption was successful. As the submitted artifact may look like random bits to the server, it would otherwise not be able to verify correct decryption. In case decryption fails, indicating that the message was sent to the wrong receiver, an alarm signal (f.e., in log) can be issued. If desired, the encryption/decryption step can be omitted.

The message is then routed to the decision instance (DI) responsible for the target address. This DI uses the ACL of the target address to make the following permission decision concerning the artifact via the items/entries in the artifact's ACL:
1. Via the name of the ACL item (which is specified for the artifact submitted in the message) the right ACL item is retrieved. The DI verifies that the right to submit is specified as a permitted action for this item - if not, the request is rejected and an alarm signal is issued.
2. Using the certificates in the entries of the ACL item, the corresponding signature public keys are retrieved and applied to the message to verify that all required users have signed the message containing the artifact. In case verification fails, the request is rejected and an alarm signal is issued.
3. The artifact is stored in the repository and version number and history are updated (these are standard SCM system check in activities).

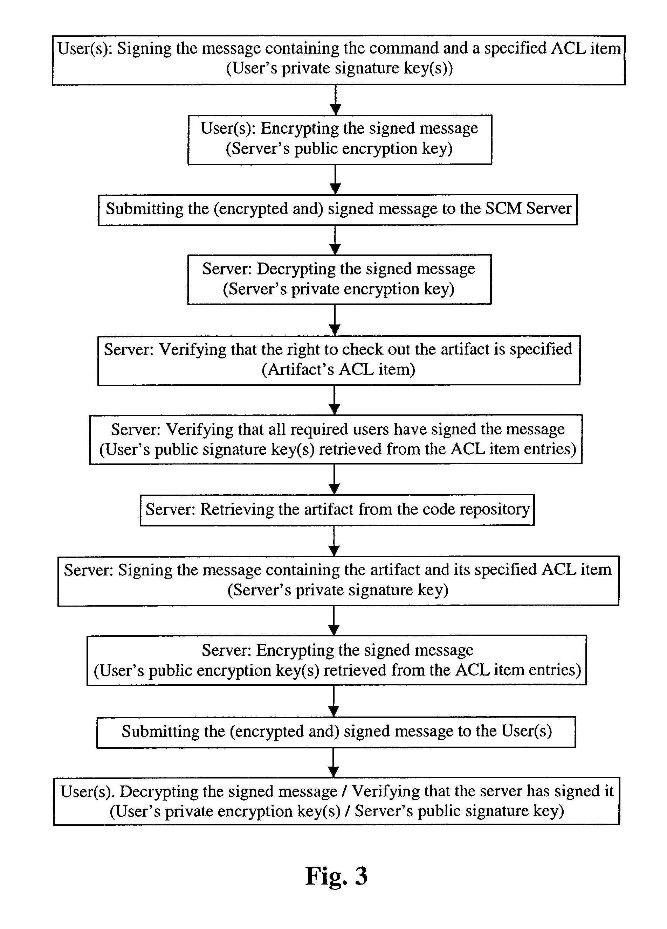

The check out process works in an analogous way, it is illustrated in Fig.3. A check out command specifying the source address S and signed by the submitting user(s) is submitted to the server. As in the check in case, the signing can be carried out in the standard way and the message (here containing the check out command) can be encrypted with the server's public encryption key.

Having received the encrypted message containing the check out command and the source address information S, the server decrypts the message using its private encryption key (or one of them, resp.). In this way, the server can (a) find the place from where to retrieve the artifact and (b) check whether decryption was successful. In case decryption fails, an alarm signal (f.e., in log) can be issued. As in the check in case, the encryption/decryption step can be omitted, if desired.

The message is then routed to the decision instance (DI) responsible for the source address. This DI uses the ACL of the source address to make the following permission decision concerning the artifact via the items/entries in the artifact's ACL:
1. Via the name of the ACL item (which is specified for the artifact submitted in the message) the right ACL item is retrieved. The DI verifies that the right to check out is specified as a permitted action for this item - if not, the request is rejected and an alarm signal is issued.
2. Using the certificates in the entries of the ACL item, the corresponding signature public keys are retrieved and applied to the message to verify that all required users have signed the message containing the check out command. In case verification fails, the request is rejected and an alarm signal is issued.
3. The artifact is retrieved from the repository and locked, if required by the permissions defined by the item (these are standard SCM system check out activities).
4. The artifact is then signed with the server's signature private key.
5. Finally, the signed artifact can be encrypted again with the requester's encryption public key(s) from the certificate. In case of multiple entries (i.e. multiple users) in the artifact's ACL item, two policies for handling are possible:
   a) multiple signatures are required for the check out command but there is only one receiver to which the checked out artifact is sent encrypted with his key, or
   b) multiple signatures are required for the check out command and multiple decryptions are required for the use of the artifact - in this case, the artifact is sent encrypted with the keys of all entries (users) in the artifact's ACL item.

On the receiver client side the corresponding server signature verification and eventually multi decryption workflow will occur before the artifact is ready to be worked upon.

As can easily be seen from the above description of the check in/out processes, the method according to the present invention enhances the security of SCM systems in that it provides a facility to enable (a) authentication, i.e. verify that a certain artifact to be integrated into the project originates from certain author(s) who is/are authorized to contribute this artifact; (b) integrity, i.e. verify that the artifact has not been modified on transmission from the author(s) to the integration point; and (c) auditability, i.e. find and prove the author(s) of a certain contribution, f.e., in the course of later product liability and security violation investigations.

Other operational processes such as list, history etc. can be carried out in a similar way in that, f.e., a command message is signed by one or more users as required by the entries of an ACL item which in turn defines the permitted actions for an artifact.

## Claims

1. Method for enhancing authentication, integrity and auditability security in software configuration management (SCM) systems which manage contributions (artifacts) to the system by structuring them in a hierarchical order and by defining for each artifact an access control list (ACL)
**characterized in that** the method comprises the following steps of:
- providing the SCM system (either as a whole or per artifact) with a signature key pair and distributing the public key(s) to the users,
- providing each ACL with at least one item where each item defines certain rights/permissions with respect to the associated artifact,
- providing each item with at least one entry where each entry specifies a user by means of his digital certificate containing his public key(s) for signature,
- upon check in, receiving a message that has been signed by one or more users including an artifact in conjunction with a specified item for this artifact, verifying that the right to submit the artifact is specified by the item, verifying that the required user(s) has/have signed the message by applying to the message the corresponding signature public key(s) in the one or more entries associated with the item, and storing the artifact in the code repository, and/or
- upon check out, receiving a message signed by one or more users including a check out command in conjunction with a specified item for a certain artifact, verifying that the right to check out the artifact is specified by the item, verifying that the required user(s) has/have signed the message by applying to the message the corresponding signature public key(s) in the one or more entries associated with the item, retrieving the artifact from the repository and eventually locking it according to the permissions defined by the item, signing the artifact with the server's (corresponding) signature private key, and submitting the artifact to the user(s).

2. Method according to claim 1, **characterized in that** the method comprises the additional step of:
- configuring the SCM system - either as a whole or per artifact - with an encryption key pair and distributing the public key(s) to the users,
and that the step upon check in comprises
- the additional initial measure: receiving an encrypted message containing said message signed by one or more users including an artifact in conjunction with a specified item for this artifact and decrypting the message using the server's private encryption key (or one of them, resp.),
and/or that the step upon check out comprises
- the additional initial measure: receiving an encrypted message containing said message signed by one or more users including a check out command in conjunction with a specified item for a certain artifact and decrypting the message using the server's private encryption key (or one of them, resp.), as well as
- the additional final measure before submitting the artifact to the user(s): encrypting the signed artifact with the requester's encryption public key(s) from the certificate.

3. Method according to claim 2, **characterized in that** in case of multiple users during check out, one of the two following ways for encrypting the signed artifact before submitting it to the user(s) is used: (a) encrypting the signed artifact with the encryption public key of only one of the users or (b) encrypting the signed artifact with the encryption public keys of all of the users.

4. Method according to one of the preceding claims, **characterized in that** multiple items in an ACL can define different rights with respect to the artifact and can thus be considered as valid alternatives for handling the artifact.

5. Method according to one of the preceding claims, **characterized in that** if an item consists of multiple entries, the specified entries have to be considered in conjunction, i.e. the users can only execute an action permitted by the item if they request permission together.
